# EUROPEAN PATENT APPLICATION

(11) **EP 3 998 698 A1**
(43) Date of publication of application: **18.05.2022**
(21) Application number: 19942315.3
(22) Date of filing: 12.11.2019
(51) Int. Cl.: H02M 1/34

(54) **DIRECTLY SERIALLY-CONNECTABLE MODULE, CONVERTER CHAIN, CONVERTER, AND CONTROL METHOD**

(30) Priority: 16.08.2019 CN 201910760488; 12.10.2019 CN 201910969891
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); WANG, Yu, Nanjing, Jiangsu 211102 (CN); JIANG, Tiangui, Nanjing, Jiangsu 211102 (CN); YAO, Hongyang, Nanjing, Jiangsu 211102 (CN); SUN, Le, Nanjing, Jiangsu 211102 (CN)
(74) Representative: Becker Kurig & Partner Patentanwälte mbB
(86) International application number: PCT/CN2019/117659
(87) International publication number: WO 2021/031401

(57) **Abstract**

The present application provides a directly serially-connectable module, a converter chain, a converter, a control method, a device, and a medium. The directly serially-connectable module comprises a switch unit and a voltage clamp unit. The switch unit comprises a first power semiconductor device. The voltage clamp unit comprises a second power semiconductor device and a resistance-capacitance unit, and the resistance-capacitance unit is connected in serial to the second power semiconductor device.

## Description

### Technical Field

The present application relates to the technical field of power electronics, in particular to a directly serially-connectable module, a converter chain, a converter, and a control method.

### Background

With the development of modern power electronics technology, the application and development of single-transistor power semiconductor devices are greatly restrained because of their relatively limited voltage withstanding level. Power semiconductor devices may be connected in serial directly to meet the requirements of modules for voltage levels, and this is the most cost-efficient solution compared with other solutions.

However, in the prior art, the solution for direct serial connection of power semiconductor devices is not mature. Disequilibrium static or dynamic voltage division may be caused during the high-frequency operating process of the power semiconductor devices for the following three reasons: the performance difference of individual devices; inconsistent parameters of peripheral circuits such as absorption capacitor, gate drive resistor and the parasitic inductance of IGBTs; and the incompletely consistency of time sequences of control drive signals. Once static or dynamic disequilibrium voltage division occurs, some devices may be damaged due to over-voltage. Because of this technical bottleneck, the direct serial connection of power semiconductor devices fails to be widely applied in the power electronics field.

### Summary

The embodiments of the present application provide a directly serially-connectable module, a converter chain, a converter, and a control method to realize synchronous control of directly serially-connected power semiconductor devices.

One embodiment of the present application provides a directly serially-connectable module, comprising a switch unit and a voltage clamp unit, wherein the switch unit comprises a first power semiconductor device; and the voltage clamp unit is connected in parallel to the switch unit and comprises a second power semiconductor device and a resistance-capacitance unit, and the resistance-capacitance unit is connected in serial to the second power semiconductor device.

According to some embodiments, the resistance-capacitance unit comprises a direct-current capacitor and a balancing resistor connected in serial.

According to some embodiments, the voltage clamp unit further comprises a fourth power semiconductor device, and the second power semiconductor device is, after being connected in serial to the balancing resistor, connected in parallel to the fourth power semiconductor device.

According to some embodiments, the fourth power semiconductor device comprises a diode.

According to some embodiments, the voltage clamp unit further comprises a first diode connected in parallel to the second power semiconductor device.

According to some embodiments, the second power semiconductor device comprises one power semiconductor device, or at least two serially-connected power semiconductor devices.

According to some embodiments, the switch unit further comprises a bypass switch connected in parallel to the first power semiconductor device.

According to some embodiments, the switch unit further comprises a third power semiconductor device, wherein the third power semiconductor device is connected in parallel to the first power semiconductor device and has the properties of a stabilivolt.

According to some embodiments, the switch unit further comprises a current-limiting element connected in serial to the first power semiconductor device.

According to some embodiments, the current-limiting element comprises a resistor and/or an inductor.

According to some embodiments, the resistance-capacitance unit further comprises a second diode connected in parallel to the balancing resistor.

According to some embodiments, the switch unit further comprises a third diode anti-parallelly connected to the first power semiconductor device.

According to some embodiments, the first power semiconductor device and the second power semiconductor device are fully-controlled power semiconductor devices or half-controlled power semiconductor devices.

One embodiment of the present application further provides a converter chain, comprising at least two above-mentioned directly serially-connectable modules connected in serial.

According to some embodiments, the converter chain further comprises an energy dissipation unit, wherein the energy dissipation unit is connected in serial to the at least two directly serially-connectable modules and comprises a resistor and/or an inductor.

One embodiment of the present application further provides a three-phase converter, having a direct-current positive electrode and a direct-current negative electrode, wherein each phase of the three-phase converter comprises an upper bridge arm, a lower bridge arm, and an alternating-current terminal, the upper bridge arm has a first terminal and a second terminal, and the first terminal is electrically connected to the direct-current positive electrode; the lower bridge arm has a third terminal and a fourth terminal, and the fourth terminal is electrically connected to the direct-current negative electrode; the alternating-current terminal is electrically connected to the second terminal and the third terminal; wherein each upper bridge arm and each lower bridge arm comprise the above-mentioned converter chain.

According to some embodiments, each phase of the three-phase converter further comprises a diode valve section comprising at least two diodes, wherein the diode valve section has one terminal connected to a midpoint of the upper bridge arm of a corresponding phase and another terminal connected to a midpoint of the lower bridge arm of the corresponding phase, and the midpoints of the diode valve sections of all the phases are connected to serve as a direct-current neutral point.

One embodiment of the present application further provides a control method of the converter chain, the converter chain is connected in parallel to two terminals of a direct-current circuit, and when it is detected that an over-voltage happens to the direct-current circuit after the converter chain is started, the method comprises: synchronously turning on the first power semiconductor devices of the directly serially-connectable modules in response to a voltage of the direct-current circuit, connected in parallel to the converter chain, exceeding a first action voltage threshold; turning off the first power semiconductor devices when it is detected that the voltage of the direct-current circuit returns to a normal voltage value; wherein the following steps are performed cyclically before it is detected that the voltage of the direct-current circuit returns to the normal voltage value: controlling the second power semiconductor devices of the directly serially-connectable modules to be turned on in response to a voltage of the direct-current capacitors of the directly serially-connectable modules exceeding a second action voltage threshold and the first power semiconductor devices being turned on; and turning off the second power semiconductor devices in response to the voltage of the direct-current capacitors of the directly serially-connectable modules returning to a voltage return value.

One embodiment of the present application further provides a control method of the three-phase converter. When the three-phase converter is started, the method comprises: turning off the first power semiconductor devices and the second power semiconductor devices in the directly serially-connectable modules; inputting an alternating current to the alternating-current terminals of the three-phase converter; and charging each direct-current capacitor until a voltage of the direct-current capacitor exceeds a starting voltage threshold to enable the converter to start.

One embodiment of the present application further provides a control method of the three-phase converter. When the three-phase converter enters a normal operating state after being started, the method comprises: controlling the first power semiconductor devices of the directly serially-connectable modules to be turned on or off by means of a control instruction; controlling the second power semiconductor devices of the directly serially-connected modules to be turned on in response to a voltage of the direct-current capacitors of the directly serially-connectable modules exceeding a second action voltage threshold and the first power semiconductor devices being turned on; and controlling the second semiconductor devices of the directly serially-connectable modules to be turned off in response to the voltage of the direct-current capacitors of the directly serially-connectable modules returning to a voltage return value.

According to some embodiments, the method further comprises: in response to a fault happening to a directly serially-connectable module of the three-phase converter, turning off the first power semiconductor device of the faulted directly serially-connectable module; and closing the bypass switch connected in parallel to the first power semiconductor device.

According to the technical solution provided by the embodiments of the disclosure, the switch unit and the voltage clamp unit in the directly serially-connectable module work cooperatively, and while the first power semiconductor device is controlled to be turned on or off, the second power semiconductor device of the voltage clamp unit is turned on or off to actively release energy accumulated on the direct-current capacitor due to an over-voltage, so that the voltage of all modules is balanced, and an over-voltage of the modules is avoided. In this way, the first power semiconductor devices will not withstand an excessively high voltage even if they are not turned off synchronously, so that synchronous control of directly serially-connected power semiconductor devices is realized; the structure is simple, and the reliability is high.

### Brief Description of the Drawings

To better clarify the technical solutions of the embodiments of the present application, drawings used for describing the embodiments will be briefly introduced below. Clearly, the drawings in the following description merely illustrate some embodiments of the present application, and those ordinarily skilled in the art may obtain other drawings according to the following ones without paying creative effort.
FIG. 1A is a first composition diagram of a directly serially-connectable module according to one embodiment of the present application;
FIG. 1B is a second composition diagram of a directly serially-connectable module according to one embodiment of the present application;
FIG. 1C is a third composition diagram of a directly serially-connectable module according to one embodiment of the present application;
FIG. 1D is a fourth composition diagram of a directly serially-connectable module according to one embodiment of the present application;
FIG. 1E is a fifth composition diagram of a directly serially-connectable module according to one embodiment of the present application;
FIG. IF is a sixth composition diagram of a directly serially-connectable module according to one embodiment of the present application;
FIG. 1G is a seventh composition diagram of a directly serially-connectable module according to one embodiment of the present application;
FIG 1H is an eighth composition diagram of a directly serially-connectable module according to one embodiment of the present application;
FIG. 1K is a ninth composition diagram of a directly serially-connectable module according to one embodiment of the present application;
FIG. 1M is a tenth composition diagram of a directly serially-connectable module according to one embodiment of the present application;
FIG. IN is an eleventh composition diagram of a directly serially-connectable module according to one embodiment of the present application;
FIG. 1P is a twelfth composition diagram of a directly serially-connectable module according to one embodiment of the present application;
FIG. 2A is a first composition diagram of a converter chain according to one embodiment of the present application;
FIG. 2B is a second composition diagram of a converter chain according to one embodiment of the present application;
FIG. 3A is a third composition diagram of a converter chain according to one embodiment of the present application;
FIG. 3B is a fourth composition diagram of a converter chain according to one embodiment of the present application;
FIG. 4A is a process diagram of a control method of a converter chain according to one embodiment of the present application;
FIG. 4B is a sub-process diagram of the control method of a converter chain shown in FIG. 3A;
FIG. 5A is a first schematic diagram of a current circuit for controlling a converter chain according to one embodiment of the present application;
FIG. 5B is a second schematic diagram of a current circuit for controlling a converter chain according to one embodiment of the present application;
FIG. 6A is a first schematic diagram of a current circuit for controlling a converter chain according to another embodiment of the present application;
FIG. 6B is a second schematic diagram of the current circuit for controlling a converter chain according to another embodiment of the present application;
FIG. 7 is a first composition diagram of a three-phase converter according to one embodiment of the present application;
FIG. 8 is a second composition diagram of a three-phase converter according to one embodiment of the present application;
FIG. 9 is a process diagram of a control method of a three-phase converter according to one embodiment of the present application;
FIG. 10 is a process diagram of a control method of a three-phase converter according to another embodiment of the present application.

### Detailed Description of Embodiments

To better clarify the purposes, technical solutions and advantages of the embodiments of the present application, specific implementations of the technical solutions of the present application will be more clearly explained in further detail below in conjunction with the accompanying drawings and embodiments. Obviously, the specific implementations and embodiments described below are merely for a descriptive purpose, and are not intended to limit the present application. The embodiments in the following description are merely illustrative ones, and are not all possible ones of the present application. All other embodiments obtained based on various transformations to the present application made by those skilled in the art should also fall within the protection scope of the present application. It should be understood that the terms such as "first", "second", "third" and "fourth" in the claims, description and drawings of the present application are used to distinguish different objects, and do not indicate any specific sequence.

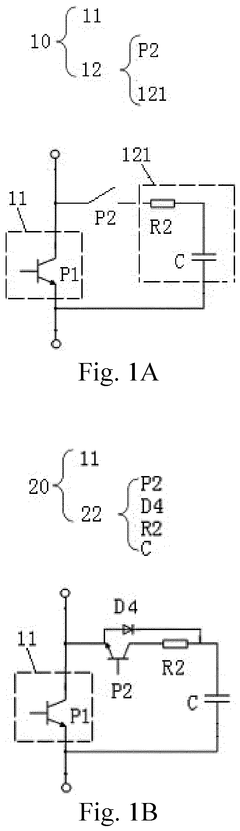

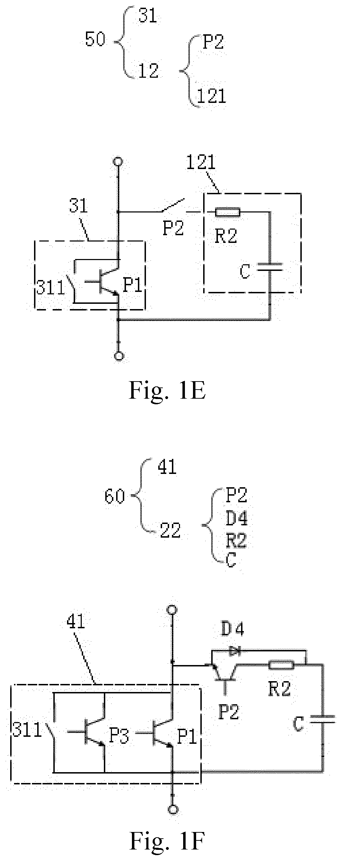

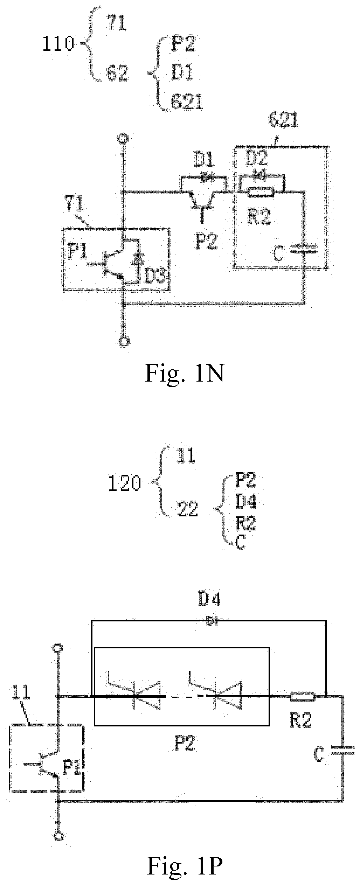

FIG. 1A is a first composition diagram of a directly serially-connectable module according to one embodiment of the present application. As shown in FIG. 1A, a directly serially-connectable module 10 according to this illustrative embodiment comprises a switch unit 11 and a voltage clamp unit 12.

Referring to FIG. 1A, the switch unit 11 comprises a first power semiconductor device P1. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 10.

Referring to FIG. 1A, the voltage clamp unit 12 comprises a second power semiconductor device P2 and a resistance-capacitance unit 121. According to some embodiments, the second power semiconductor device P2 may be one of a thyristor, a field effect transistor, a bipolar power transistor, a function combination module and a power integrated circuit, etc. The second power semiconductor device P2 comprises a second collector and a second emitter, and the second emitter is connected to the first collector and is used as a positive terminal of the directly serially-connectable module 10. The resistance-capacitance unit 121 is connected between the second collector and the first emitter, and comprises a direct-current capacitor C and a balancing resistor R2 connected in serial. Optionally, the first power semiconductor device P1 and the second power semiconductor device P2 are fully-controlled power semiconductor devices or half-controlled power semiconductor devices.

According to the technical solution provided by this embodiment of the disclosure, the switch unit and the voltage clamp unit in the directly serially-connectable module work cooperatively, and when the first power semiconductor device is controlled to be turned on or off, the second power semiconductor device of the voltage clamp unit is turned on or off to actively release energy accumulated on the direct-current capacitor due to an over-voltage, so that the voltage of all modules is balanced, and an over-voltage of the modules is avoided. In this way, the first power semiconductor devices will not withstand an excessively high voltage even if they are not turned off synchronously, so that synchronous control of directly serially-connectable power semiconductor devices is realized; the structure is simple, and the reliability is high.

FIG. 1B is a second composition diagram of a directly serially-connectable module according to one embodiment of the present application. As shown in FIG. 1B, a directly serially-connectable module 20 according to this illustrative embodiment comprises a switch unit 11 and a voltage clamp unit 22.

Referring to FIG. 1B, the switch unit 11 comprises a first power semiconductor device P1. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 20.

Referring to FIG. 1B, the voltage clamp unit 22 comprises a second power semiconductor device P2, a resistance-capacitance unit and a fourth power semiconductor device D4. The second power semiconductor device P2 may be one of a thyristor, a field effect transistor, a bipolar power transistor, a function combination module and a power integrated circuit, etc. The second power semiconductor device P2 comprises a second collector and a second emitter, and the second emitter is connected to the first collector and is used as a positive terminal of the directly serially-connectable module 20. The resistance-capacitance unit is connected between the second collector and the first emitter, and comprises a direct-current capacitor C and a balancing resistor R2 connected in serial. After being connected in serial to the balancing resistor R2, the second power semiconductor device P2 is connected in parallel to the fourth power semiconductor device D4. Optionally, the fourth power semiconductor device D4 may be, but is not limited to, a diode.

According to some embodiments, the second power semiconductor device P2 may be a unidirectional power semiconductor device, the fourth power semiconductor device D4 is anti-parallelly connected to the second power semiconductor device P2 and the balancing resistor R2 connected in serial, and when the second power semiconductor device P2 is turned off, the direct-current capacitor may be charged by means of the fourth power semiconductor device D4.

Optionally, the second power semiconductor device P2 may comprise multiple power semiconductor devices connected in serial, as shown in FIG. 1P which is a twelfth composition diagram of the directly serially-connectable module 120 according to one embodiment of the present application.

According to the technical solution provided by this embodiment, on the basis of an improvement on the directly serially-connectable module, the direct-current capacitor is pre-charged by means of the fourth power semiconductor device D4, so that damage to the device caused by an excessive charge current is avoided, and an extra pre-charge circuit is not needed.

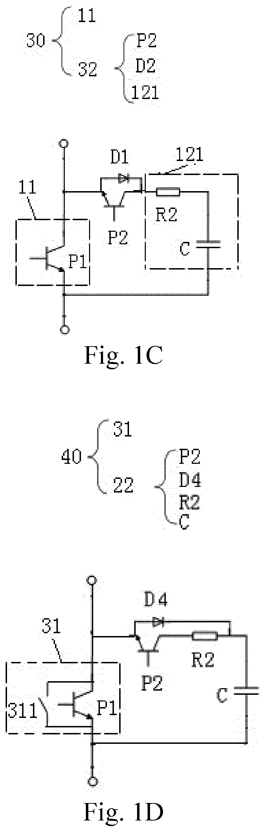

FIG. 1C is a third composition diagram of a directly serially-connectable module according to one embodiment of the present application. As shown in FIG. 1C, a directly serially-connectable module 30 according to this illustrative embodiment comprises a switch unit 11 and a voltage clamp unit 32.

Referring to FIG. 1C, the switch unit 11 comprises a first power semiconductor device P1. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 30.

Referring to FIG. 1C, the voltage clamp unit 32 comprises a second power semiconductor device P2, a first diode D1 and a resistance-capacitance unit 121. According to some embodiments, the first diode D1 and the second power semiconductor device are connected in parallel, so that when the second power semiconductor device P2 is turned off, the resistance-capacitance unit 121 may be charged by means of the first diode D1. The second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 30. The first diode D1 is connected in parallel to the second power semiconductor device. The resistance-capacitance unit 121 is connected between the second collector and the first emitter, and comprises a direct-current resistor C and a balancing resistor R2 connected in serial.

According to some embodiments, the second power semiconductor device P2 may be a unidirectional power semiconductor device, the first diode D1 is anti-parallelly connected to the second power semiconductor device P2, and when the second power semiconductor device P2 is turned off, the direct-current capacitor may be charged by means of the first diode D1 and the balancing resistor R2.

According to the technical solution provided by this embodiment, on the basis of an improvement of the directly serially-connectable module, the direct-current capacitor is pre-charged by means of the first diode and the balancing resistor, so that damage to the device caused by an excessive charge current is avoided, and an extra pre-charge circuit is not needed.

FIG. 1D is a fourth composition diagram of a directly serially-connectable module according to one embodiment of the present application. As shown in FIG. ID, a directly serially-connectable module 40 according to this illustrative embodiment comprises a switch unit 31 and a voltage clamp unit 22.

Referring to FIG. ID, the switch unit 31 comprises a first power semiconductor device P1 and a bypass switch 311. According to some embodiments, the first power semiconductor device P1 may comprises one of a thyristor, a field effect transistor, a bipolar power transistor, a function combination module and a power integrated circuit, etc. The first semiconductor device P1 comprises a first collector and a first emitter, and the first emitter is used as negative terminal of the directly serially-connectable module 40. When a fault happens to the directly serially-connectable module 40, the bypass switch 311 is closed to bypass the first power semiconductor device P1.

Referring to FIG. ID, the voltage clamp unit 22 comprises a second power semiconductor device P2, a resistance-capacitance unit and a fourth power semiconductor device D4. The second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 40. The resistance-capacitance unit is connected between the second collector and the first emitter, and comprises a direct-current capacitor C and a balancing resistor R2 connected in serial. After being connected in serial to the balancing resistor R2, the second semiconductor device P2 is connected in parallel to the fourth power semiconductor device D4. Optionally, the fourth power semiconductor device D4 may be, but is not limited to, a diode. Optionally, the first power semiconductor device P1 and the second power semiconductor device P2 are fully-controlled power semiconductor devices or half-controlled power semiconductor devices.

According to the technical solution provided by this embodiment, on the basis of an improvement on the directly serially-connectable module, the module is bypasses by means of the bypass switch when a fault happens to the module, so that the reliability of the module is further improved.

FIG. 1E is a fifth composition diagram of a directly serially-connectable module according to one embodiment of the present application. As shown in FIG. IE, a directly serially-connectable module 50 according to this illustrative embodiment comprises a switch unit 31 and a voltage clamp unit 12.

Referring to FIG. IE, the switch unit 31 comprises a first power semiconductor device P1 and a bypass switch 311. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 50. When a fault happens to the directly serially-connectable module 50, the bypass switch 311 is closed to bypass the first power semiconductor device P1.

Referring to FIG. IE, the voltage clamp unit comprises a second power semiconductor device P2 and a resistance-capacitance unit 121. The second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 50. The resistance-capacitance unit 121 is connected between the second collector and the first emitter, and comprises a direct-current capacitor C and a balancing resistor R2 connected in serial. Optionally, the first power semiconductor device P1 and the second power semiconductor device P2 are fully-controlled power semiconductor devices or half-controlled power semiconductor devices.

According to the technical solution provided by this embodiment, on the basis of an improvement on the directly serially-connectable module, the module is bypasses by means of the bypass switch when a fault happens to the module, so that the reliability of the module is further improved.

FIG. IF is a sixth composition diagram of a directly serially-connectable module according to one embodiment of the present application. As shown in FIG. IF, a directly serially-connectable module 60 according to this illustrative embodiment comprises a switch unit 41 and a voltage clamp unit 22.

Referring to FIG. IF, the switch unit 41 comprises a first power semiconductor device P1, a third power semiconductor device P3 and a bypass switch 311. According to some embodiments, the first power semiconductor device P1 and the third power semiconductor device P3 may be one or more of a thyristor, a field effect transistor, a bipolar power transistor, a function combination module and a power integrated circuit, etc.

According to some embodiments, the first power semiconductor device P1 comprises a first collector and a first emitter, and the first emitter is used as a negative terminal of the directly serially-connectable module 60. When a fault happens to the directly serially-connectable module 60, the bypass switch 311 is closed to bypass the first power semiconductor device P1. The third power semiconductor device P3 is connected in parallel to the first power semiconductor device P1 and has the properties of a stabilivolt. When a voltage across the two terminals of the directly serially-connectable module exceeds a voltage threshold of the module, the third power semiconductor device P3 is passively broken down.

Referring to FIG. IF, the voltage clamp unit 22 comprises a second power semiconductor device P2, a resistance-capacitance unit and a fourth power semiconductor device D4. According to some embodiments, the second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 60. The resistance-capacitance unit is connected between the second collector and the first emitter, and comprises a direct-current capacitor C and a balancing resistor R2 connected in serial. After being connected in serial to the balancing resistor R2, the second power semiconductor device P2 is connected in parallel to the fourth power semiconductor device D4. Optionally, the fourth power semiconductor device D4 may be, but is not limited to, a diode. Optionally, the first power semiconductor device P1 and the second power semiconductor device P2 are fully-controlled power semiconductor devices or half-controlled power semiconductor devices.

According to the technical solution provided by this embodiment, on the basis of an improvement of the directly serially-connectable module, the module is bypassed by means of the bypass switch when a malfucntion happens to the module; and when power fails during the control process or the bypass switch fails, an over-voltage continuously passes through the direct-current capacitor to break down the third power semiconductor device and allow a current to pass through continuously till the next repair cycle for replacement, so that the reliability of the module is further improved.

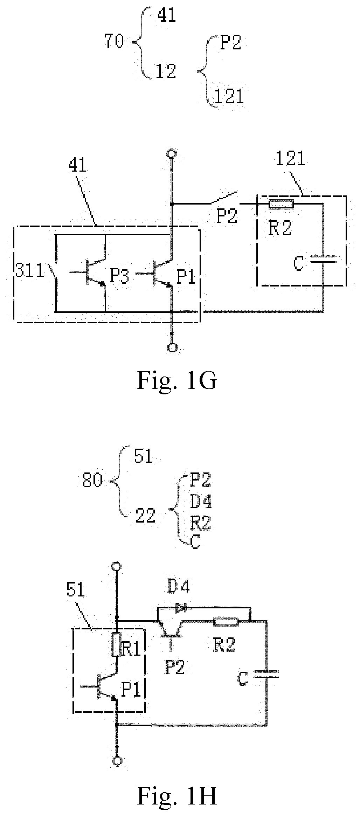

FIG. 1G is a seventh composition diagram of a directly serially-connectable module according to one embodiment of the present application. As shown in FIG. 1G, a directly serially-connectable module 70 according to this illustrative embodiment comprises a switch unit 41 and a voltage clamp unit 12.

Referring to FIG. 1G, the switch unit 41 comprises a first power semiconductor device P1, a third power semiconductor device P3 and a bypass switch 311. According to some embodiments, the first power semiconductor device P1 and the third power semiconductor device P3 may be one of more of a thyristor, a field effect transistor, a bipolar power transistor, a function combination module and a power integrated circuit, etc.

According to some embodiments, the first power semiconductor device P1 comprises a first collector and a first emitter, and the first emitter is used as a negative terminal of the directly serially-connectable module 70. When a fault happens to the directly serially-connectable module 70, the bypass switch 311 is closed to bypass the first power semiconductor device P1. The third power semiconductor device P3 is connected in parallel to the first power semiconductor device P1 and has the properties of a stabilivolt. When a voltage across the two terminals of the directly serially-connectable module exceeds a voltage threshold of the module, the third power semiconductor device P3 is passively broken down.

Referring to FIG. 1G, the voltage clamp unit 12 comprises a second power semiconductor device P2 and a resistance-capacitance unit 121. According to some embodiments, the second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 70. The resistance-capacitance unit 121 is connected between the second collector and the first emitter, and comprises a direct-current capacitor C and a balancing resistor R2 connected in serial. Optionally, the first power semiconductor device P1 and the second power semiconductor device P2 are fully-controlled power semiconductor devices or half-controlled power semiconductor devices.

According to the technical solution provided by this embodiment, on the basis of an improvement of the directly serially-connectable module, the module is bypassed by means of the bypass switch when a fault happens to the module; and when power fails during the control process or the bypass switch fails, an over-voltage continuously passes through the direct-current capacitor to break down the third power semiconductor device and allow a current to pass through continuously till the next repair cycle for replacement, so that the reliability of the module is further improved.

FIG. 1H is an eighth composition diagram of a directly serially-connectable module according to one embodiment of the present application. As shown in FIG. 1H, a directly serially-connectable module 80 according to this illustrative embodiment comprises a switch unit 51 and a voltage clamp unit 22.

As shown in FIG. 1H, the switch unit 51 comprises a first power semiconductor device P1 and a current-limiting element. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 80. The current-limiting element is connected in serial to the first power semiconductor device P1, and comprises a resistor and/or an inductor. In this embodiment, the current-limiting element comprises a resistor R1.

Referring to FIG. 1H, the voltage clamp unit 22 comprises a second power semiconductor device P2, a resistance-capacitance unit and a fourth power semiconductor device D4. According to some embodiments, the second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connected module 80. The resistance-capacitance unit is connected between the second collector and the first emitter, and comprises a direct-current capacitor C and a balancing resistor R2 connected in serial. After being connected in serial to the balancing resistor R2, the second power semiconductor device P2 is connected in parallel to the fourth power semiconductor device D4. Optionally, the fourth power semiconductor device D4 may be, but is not limited to, a diode. Optionally, the first power semiconductor device P1 and the second power semiconductor device P2 are fully-controlled power semiconductor devices or half-controlled power semiconductor devices.

According to the technical solution provided by this embodiment, the resistor R1 is connected in serial to the first power semiconductor device PI; when the first power semiconductor device P1 is turned on, the resistor R1 is put into the circuit to fulfill an energy dissipation effect and limit the current passing through the first power semiconductor device P1.

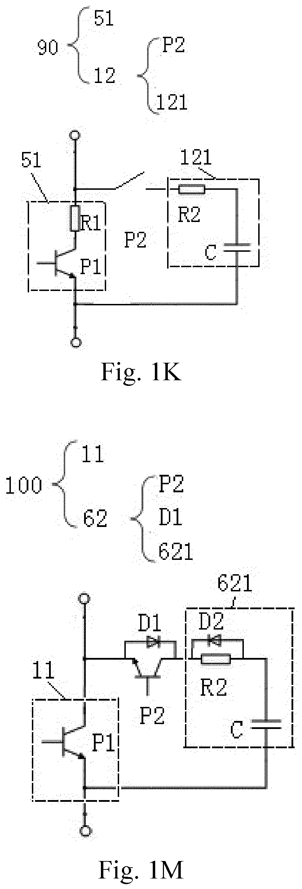

FIG. 1K is a ninth composition diagram of a directly serially-connectable module according to one embodiment of the present application. As shown in FIG. 1K, a directly serially-connectable module 90 according to this illustrative embodiment comprises a switch unit 51 and a voltage clamp unit 12.

Referring to FIG. 1K, the switch unit 51 comprises a first power semiconductor device P1 and a current-limiting element. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 90. The current-limiting element is connected in serial to the first power semiconductor device P1, and comprises a resistor and/or an inductor. In this embodiment, the current-limiting element comprises a resistor R1.

Referring to FIG. 1K, the voltage clamp unit 12 comprises a second power semiconductor device P2 and a resistance-capacitance unit 121. According to some embodiments, the second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 90. The resistance-capacitance unit 121 is connected between the second collector and the first emitter, and comprises a direct-current capacitor C and a balancing resistor R2 connected in serial. The first power semiconductor device P1 and the second power semiconductor device P2 are fully-controlled power semiconductor devices or half-controlled power semiconductor devices.

According to the technical solution provided by this embodiment, the resistor R1 is connected in serial to the first power semiconductor device PI; and when the first power semiconductor device P1 is turned on, the resistor R1 is put into the circuit to fulfill an energy dissipation effect and limit a current passing through the first power semiconductor device P1.

FIG. 1M is a tenth composition diagram of a directly serially-connectable module according to one embodiment of the present application. As shown in FIG. 1M, a directly serially-connectable module 100 according to this illustrative embodiment comprises a switch unit 11 and a voltage clamp unit 62.

Referring to FIG. 1M, the switch unit 11 comprises a first power semiconductor device P1. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connectable module 100.

Referring to FIG. 1M, the voltage clamp unit 62 comprises a second power semiconductor device P2, a resistance-capacitance unit 621, and a first diode D1 anti-parallelly connected to the second power semiconductor device P2. According to some embodiments, the second power semiconductor device P2 may be one of a thyristor, a field effect transistor, a bipolar power transistor, a function combination module and a power integrated circuit, etc.

According to some embodiments, the second power semiconductor device P2 comprises a second collector and a second emitter, and the second emitter is connected to the first collector and is used as a positive terminal of the directly serially-connectable module 100. The resistance-capacitance unit 621 is connected between the second collector and the first emitter, and comprises a direct-current capacitor C, a balancing resistor R2 connected in serial to the direct-current capacitor C, and a second diode D2 connected in parallel to the balancing resistor R2. The first power semiconductor device P1 and the second power semiconductor device P2 are fully-controlled power semiconductor devices or half-controlled power semiconductor devices.

According to the technical solution provided by this embodiment, the second diode D2 is connected in parallel to the balancing resistor R2. The resistor usually has an equivalent inductance, so when a current in the circuit changes suddenly, a transient over-voltage will be generated at two terminals of the resistor, and the voltage is clamped by the second diode D2 to avoid an over-voltage.

FIG. IN is an eleventh composition diagram of a directly serially-connectable module according to one embodiment of the present application. As shown in FIG. IN, a directly serially-connectable module 110 according to this illustrative embodiment comprises a switch unit 71 and a voltage clamp unit 62.

Referring to FIG. IN, the switch unit 71 comprises a first power semiconductor device P1 and a third diode D3. According to some embodiments, the first power semiconductor device P1 may be one of a thyristor, a field effect transistor, a bipolar power transistor, a function combination module and a power integrated circuit, etc. The first power semiconductor device P1 comprises a first collector and a first emitter, and the first emitter is used as a negative terminal of the directly serially-connected module 110. The third diode D3 is anti-parallelly connected to the first power semiconductor device P1.

Referring to FIG. IN, the voltage clamp unit 62 comprises a second power semiconductor device P2, a resistor unit 621, and a second diode D2. According to some embodiments, the second power semiconductor device P2 may be one of a thyristor, a field effect transistor, a bipolar power transistor, a function combination module and a power integrated circuit, ect.

According to some embodiment, the second power semiconductor device P2 comprises a second collector and a second emitter, and the second emitter is connected to the first collector and is used as a positive terminal of the directly serially-connectable module 110. The resistance-capacitance unit 621 is connected between the second collector and the first emitter, and comprises a direct-current capacitor C and a balancing resistor R2 connected in serial. The second diode D2 is connected in parallel to the balancing resistor R2.

The first power semiconductor device P1 and the second power semiconductor device P2 are fully-controlled power semiconductor devices or half-controlled power semiconductor devices. The third diode D3 is anti-parallelly connected to the first power semiconductor device P1 to protect the first power semiconductor device against high-voltage breakdown caused by a sudden turn-off and provide a free-wheeling passage to be used as a free-wheeling diode.

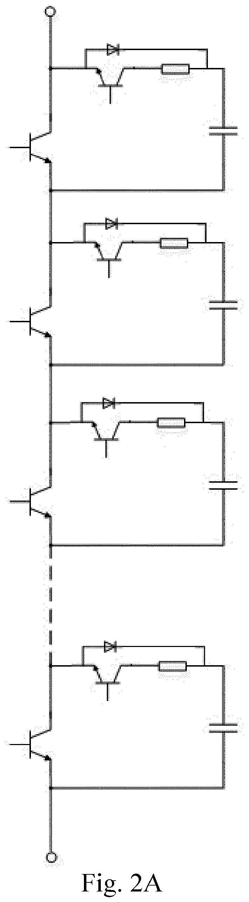

FIG. 2A is a composition diagram of a converter chain according to one embodiment of the present application. As shown in FIG. 2A, a converter chain according to this illustrative embodiment comprises at least two directly serially-connectable modules connected in serial in the same direction. The directly serially-connectable modules are modules 20 mentioned above. Optionally, the directly serially-connectable modules may also be the modules 10, 30, 40, 50, 60, 70, 80, 90, 100,110, 120 connected in serial in any form.

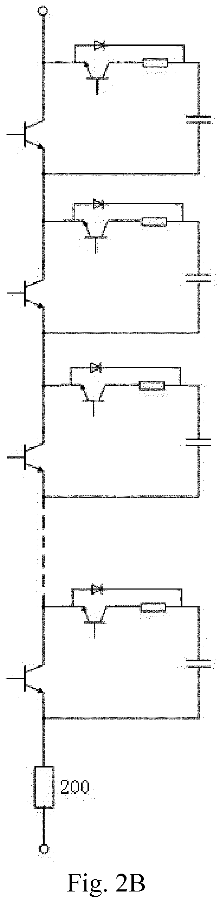

FIG. 2B is a composition diagram of a converter chain according to one embodiment of the present application. As shown in FIG. 2B, a converter chain according to this illustrative embodiment comprises at least two directly serially-connectable modules and an energy dissipation unit 200 connected in serial. The directly serially-connectable modules may be the modules 20 mentioned above. Optionally, the directly serially-connectable modules may also be modules 10, 30, 40, 50, 60, 70, 80, 90, 100, 110, 120 connected in serial in any form. The energy dissipation unit 200 comprises a resistor, or an inductor, or a combination of the resistor and the inductor.

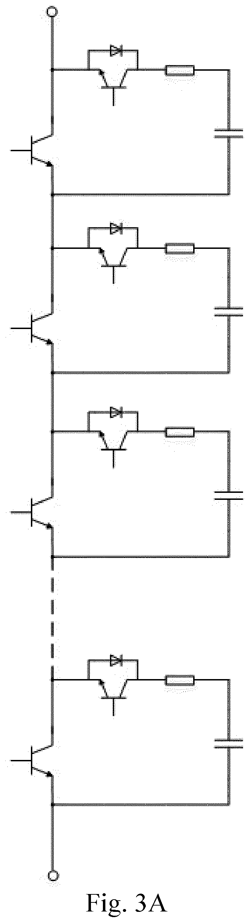

FIG. 3A is a composition diagram of a converter chain according to an eighth embodiment of the present application. As shown in FIG. 3A, a converter chain according to this illustrative embodiment comprises at least two directly serially-connectable modules connected in serial in the same direction. The directly serially-connectable modules may be the modules 30 mentioned above. Optionally, the directly serially-connectable modules may also be the modules 10, 20, 40, 50, 60, 70, 80, 90, 100, 110, 120 connected in serial in any form.

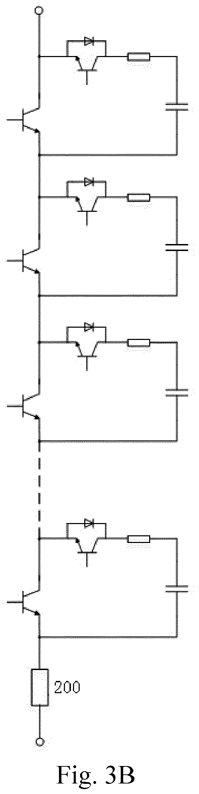

FIG. 3B is a composition diagram of a converter chain according to a ninth embodiment of the present application. As shown in FIG. 3B, a converter chain according to this illustrative embodiment comprises at least two directly serially-connectable modules and an energy dissipation unit 200 connected in serial. The directly serially-connectable modules may be the modules 30 mentioned above. Optionally, the directly serially-connectable modules may also be the modules 10, 20, 40, 50, 60, 70, 80, 90, 100, 110, 120 connected in serial in any form. The energy dissipation unit 200 comprises a resistor, or an inductor, or a combination of the resistor and the inductor.

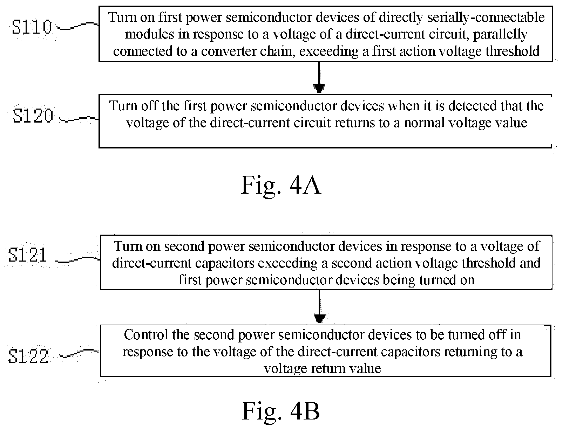

FIG. 4A is a process diagram of a control method of a converter chain according to one embodiment of the present application, and illustrates a control process when it is detected that an over-voltage happens to a direct-current circuit having two terminals to which the converter chain is connected in parallel after the converter chain is started.

Referring to FIG. 4A, in S110, first power semiconductor devices of directly serially-connectable modules are turned on in response to a voltage of the direct-current circuit, connected in parallel to the converter chain, exceeding a first action voltage threshold.

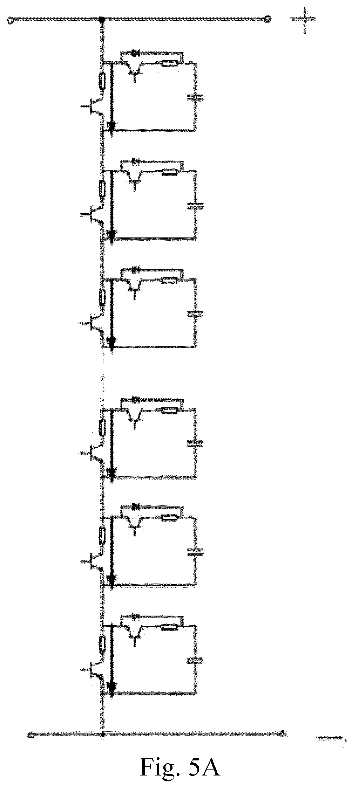

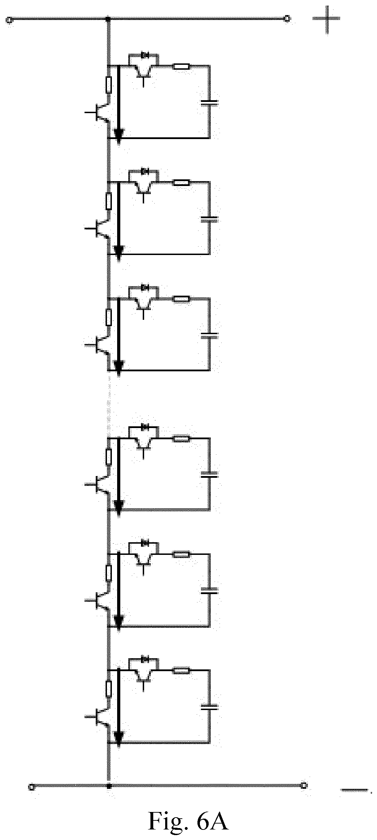

In S120, when it is detected that the voltage of the direct-current circuit returns to a normal voltage value, the first power semiconductor devices P1 are turned off. A current circuit is shown in FIG. 5A and FIG. 6A. FIG. 5A is a first schematic diagram of a current circuit for controlling the converter chain according to one embodiment of the invention, and FIG. 6A is a first schematic diagram of a current circuit for controlling the converter chain according to another embodiment of the present application.

Before S120, S121 and S122 are performed cyclically. Refer to FIG. 4B which is a sub-process diagram of the control method of the converter chain in FIG. 4A.

Referring to FIG. 4B, in S121, the second power semiconductor devices P2 of the directly serially-connectable modules are controlled to be turned on in response to a voltage of direct-current capacitors of the directly serially-connectable modules exceeding a second action voltage threshold and the first power semiconductor devices P1 being turned on. The second power semiconductor devices P2 are turned on to put balancing resistors R2 into the circuit to control the voltage of the modules.

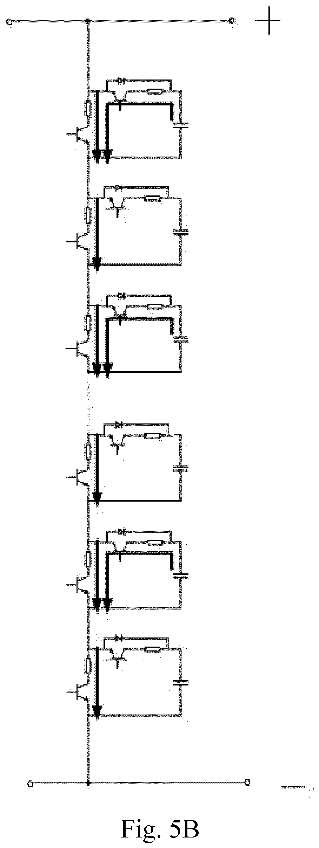

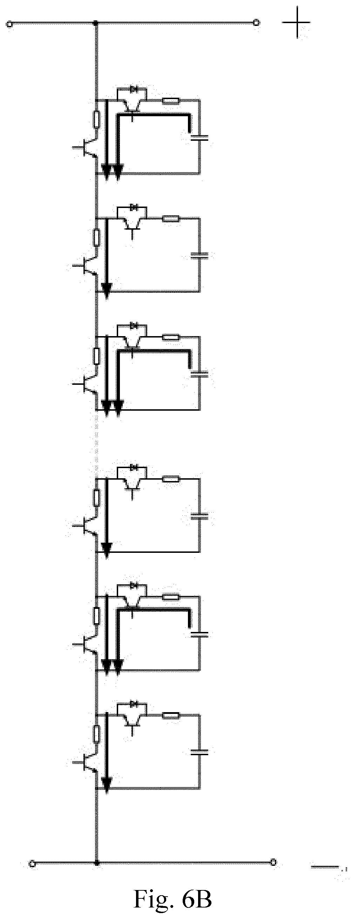

In S122, the second power semiconductor devices P2 are turned off in response to the voltage of the direct-current capacitors C of the directly serially-connected modules returning to a voltage return value. In this embodiment, a current circuit is shown in FIG. 5B and FIG. 6B. FIG. 5B is a second schematic diagram of a current circuit for controlling the converter chain according to one embodiment of the present application, and FIG. 6B is a second schematic diagram of a current circuit for controlling the converter chain according to another embodiment of the present application. The voltage of the modules 1, 3 and 5 is too high, and at this moment, the balancing resistors of the voltage clamp units of the modules 1, 3 and 5 are put into the circuit to control the voltage of the modules to be stable.

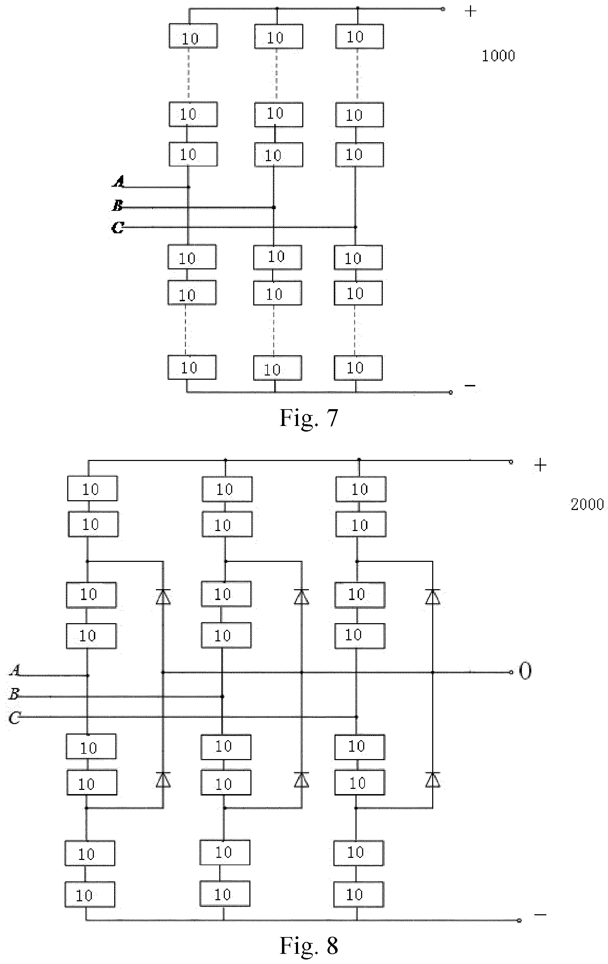

FIG. 7 is a composition diagram of a three-phase converter according to a tenth embodiment of the present application. As shown in FIG. 7, a converter is a three-phase converter that has a direct-current positive electrode and a direct-current negative electrode, and each phase of the three-phase converter comprises an upper bridge arm, a lower bridge arm and an alternating terminal.

According to some embodiments, the upper bridge arm has a first terminal and a second terminal, and the first terminal is electrically connected to the direct-current positive electrode. The lower bridge arm has a third terminal and a fourth terminal, and the fourth terminal is electrically connected to the direct-current negative electrode. The alternating terminal is electrically connected to the second terminal and the third terminal. Each upper bridge arm and each lower bridge arm each comprise the converter chain described above. The converter chain comprises at least two directly serially-connectable modules connected in serial. The directly serially-connectable modules may be the modules 10, 20, 30, 40, 50, 60, 70, 80, 90, 100, 110, 120 connected in serial in any form. Preferably, the three-phase connected directly serially-connectable modules are arranged symmetrically, but are not limited to this. According to some embodiments, the converter is a two-level three-phase AC/DC converter, and the directly serially-connectable modules of the bridge arms are turned on or off synchronously.

FIG. 8 is a composition diagram of a three-phase converter according to an eleventh embodiment of the present application. As shown in FIG. 8, a converter is a three-phase converter that has a direct-current positive electrode and a direct-current negative electrode, and each phase of the three-phase converter comprises an upper bridge arm, a lower bridge arm and an alternating terminal.

According to some embodiments, the upper bridge arm has a first terminal and a second terminal, and the first terminal is electrically connected to the direct-current positive electrode. The lower bridge arm has a third terminal and a fourth terminal, and the fourth terminal is electrically connected to the direct-current negative electrode. The alternating terminal is electrically connected to the second terminal and the third terminal. Each upper bridge arm and each lower bridge arm comprise the converter chain described above. The converter chain comprises at least two directly serially-connectable modules connected in serial. The directly serially-connectable modules may be the modules 10, 20, 30, 40, 50, 60, 70, 80, 90, 100, 110, 120 connected in serial in any form. Preferably, the three-phase connected directly serially-connectable modules are arranged symmetrically, but are not limited to this. Optionally, the converter chain further comprises an energy dissipation unit 200, and the energy dissipation unit 200 comprises a resistor, or an inductor, or a combination of the resistor and the inductor.

In this embodiment, the converter is a three-level three-phase AC/DC converter, and the directly serially-connected modules of the bridge arms are turned on or off synchronously. Each diode valve section comprises at least two diodes connected in serial, and has one terminal connected to a midpoint of the upper bridge arm of each phase of the converter and the other terminal connected to a midpoint of the lower bridge arm of each phase of the converter, and the midpoints of all the diode valve sections are connected to be used as a direct-current neutral point.

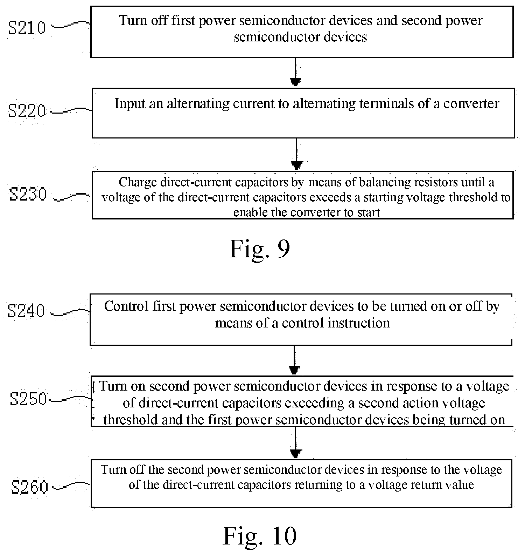

FIG. 9 is a process diagram of a control method of a three-phase converter according to one embodiment of the present application, and illustrates a control process when the three-phase converter is started. Referring to FIG. 9, in S210, first power semiconductor devices P1 and second power semiconductor devices P2 in directly serially-connectable modules are turned off.

In S220, an alternating current is input to alternating terminals A, B and C of the converter.

In S230, each direct-current capacitor C is charged until a voltage of the direct-current capacitor C exceeds a starting voltage threshold to enable the converter to start. According to some embodiments, each direct-current capacitor C is charged by means of the second power semiconductor device P2 in each voltage clamp unit, or a first diode D1 anti-parallelly connected to the second power semiconductor device P2, and a balancing resistor R2 until the voltage of the direct-current capacitor C exceeds the starting voltage threshold to enable the converter to start. When the second power semiconductor device P2 is a bidirectional power semiconductor device, the direct-current capacitor C is charged by means of the second power semiconductor device P2 and the balancing resistor R2. When the second power semiconductor device P2 is a unidirectional power semiconductor device, the direct-current capacitor C is charged by means of the first diode D1 anti-parallelly connected to the second power semiconductor device P2, and the balancing resistor R2.

FIG. 10 is a process diagram of a control method of a three-phase converter according to another embodiment of the present application, and illustrates a control process when the three-phase converter enters a normal operating state after being started.

Referring to FIG. 10, in S240, first power semiconductor devices in directly serially-connectable modules are controlled to be turned on or off by means of a control instruction.

In S250, second power semiconductor devices of the directly serially-connectable modules are controlled to be turned on in response to a voltage of direct-current capacitors of the directly serially-connectable modules exceeding a second action voltage threshold and the first power semiconductor devices being turned on. In this embodiment, the second action voltage threshold is set as 1200V; when it is detected that the voltage of the direct-current capacitors of the directly serially-connectable modules exceeds 1200V and the first power semiconductor devices are turned on, the second power semiconductor devices of the directly serially-connectable modules are controlled to be turned on.

Referring to FIG. 10, in S260, the second power semiconductor devices of the directly serially-connectable modules are controlled to be turned off in response to the voltage of the direct-current capacitors of the directly serially-connectable modules returning to a voltage return value. In this embodiment, the voltage return value is set as 1050V, and the second power semiconductor devices are controlled to be turned off when it is detected that the voltage of the direct-current capacitors returns to the voltage return value. In this way, the direct-current voltage can be effectively controlled to, but not limited to, 1050-1200V.

In the embodiment shown in FIG. 10, when a fault happens to one module, the following control process is performed.

In response to a fault happening to a directly serially-connectable module of the three-phase converter, the first power semiconductor device of the faulted directly serially-connectable module is turned off; and a bypass switch connected in parallel to the first power semiconductor device is closed.

It should be noted that, for the sake of a simple description, the embodiments of the method are expressed as a series of action combinations. But, those skilled in the art would appreciate that the present application is not limited to the action sequences described above, and some steps may be performed in other sequences or synchronously. The embodiments described above are optional ones, and actions and modules involved in these embodiments are not indispensible to the present application.

It should be noted that each embodiment described above with reference to the accompanying drawings is merely used to explain the present application, and is not intended to limit the scope of the present application. Those ordinarily skilled in the art would appreciate that modifications or equivalent substitutions made to the present application without departing from the spirit and scope of the present application should also fall within the scope of the present application. Besides, unless otherwise specified in the context, terms in a singular form may also be in a plural form, vice versa. In addition, unless otherwise specifically stated, all or part of any one embodiment may be combined with all or part of any other embodiments for use.

## Claims

1. A directly serially-connectable module, comprising:
a switch unit comprising a first power semiconductor device; and
a voltage clamp unit connected in parallel to the switch unit, and comprising:
a second power semiconductor device; and
a resistance-capacitance unit connected in series to the second power semiconductor device.

2. The directly serially-connectable module according to Claim 1, wherein the resistance-capacitance unit comprises a direct-current capacitor and a balancing resistor connected in series.

3. The directly serially-connectable module according to Claim 2, wherein the voltage clamp unit further comprises:
a fourth power semiconductor device, wherein the second power semiconductor device is, after being connected in series to the balancing resistor, connected in parallel to the fourth power semiconductor device.

4. The directly serially-connectable module according to Claim 3, wherein the fourth power semiconductor device comprises a diode.

5. The directly serially-connectable module according to Claim 1, wherein the voltage clamp unit further comprises:
a first diode connected in parallel to the second power semiconductor device.

6. The directly serially-connectable module according to Claim 1, wherein the second power semiconductor device comprises one power semiconductor device, or at least two serially-connected power semiconductor devices.

7. The directly serially-connectable module according to Claim 1, wherein the switch unit further comprises:
a bypass switch connected in parallel to the first power semiconductor device.

8. The directly serially-connectable module according to Claim 1, wherein the switch unit further comprises:
a third power semiconductor device connected in parallel to the first power semiconductor device and having properties of a stabilivolt.

9. The directly serially-connectable module according to Claim 1, wherein the switch unit further comprises:
a current-limiting element connected in series to the first power semiconductor device.

10. The directly serially-connectable module according to Claim 9, wherein the current-limiting element comprises a resistor and/or an inductor.

11. The directly serially-connectable module according to Claim 2, wherein the resistance-capacitance unit further comprises:
a second diode connected in parallel to the balancing resistor.

12. The directly serially-connectable module according to Claim 1, wherein the switch unit further comprises:
a third diode anti-parallelly connected to the first power semiconductor device.

13. The directly serially-connectable module according to Claim 1, wherein the first power semiconductor device and the second power semiconductor device are fully-controlled power semiconductor devices or half-controlled power semiconductor devices.

14. A converter chain, comprising:
at least two serially-connected directly serially-connectable modules according to any one of Claims 1-13.

15. The converter chain according to Claim 14, further comprising:
an energy dissipation unit connected in series to the at least two directly serially-connectable modules and comprising a resistor and/or an inductor.

16. A three-phase converter, having a direct-current positive electrode and a direct-current negative electrode, wherein each phase of the three-phase converter comprises:
an upper bridge arm having a first terminal and a second terminal, the first terminal being electrically connected to the direct-current positive electrode;
a lower bridge arm having a third terminal and a fourth terminal, the fourth terminal being electrically connected to the direct-current negative electrode; and
an alternating-current terminal electrically connected to the second terminal and the third terminal;
wherein each of said upper bridge arm and said lower bridge arm comprises the converter chain according to Claim 13 or 14.

17. The three-phase converter according to Claim 16, wherein each phase of the three-phase converter further comprises:
a diode valve section comprising at least two diodes;
wherein the diode valve section has one terminal connected to a midpoint of the upper bridge arm of a corresponding phase and another terminal connected to a midpoint of the lower bridge arm of the corresponding phase, and
the midpoints of the diode valve sections of all the phases are connected to serve as a direct-current neutral point.

18. A control method of the converter chain according to Claim 14 or 15, the converter chain being connected in parallel to two terminals of a direct-current circuit, and when it is detected that an over-voltage happens to the direct-current circuit after the converter chain is started, the method comprising:
synchronously turning on the first power semiconductor devices of the directly serially-connectable modules in response to a voltage of the direct-current circuit, connected in parallel to the converter chain, exceeding a first action voltage threshold;
turning off the first power semiconductor devices when it is detected that the voltage of the direct-current circuit returns to a normal voltage value, wherein the following steps are performed cyclically before it is detected that the voltage of the direct-current circuit returns to the normal voltage value:
controlling the second power semiconductor devices of the directly serially-connectable modules to be turned on in response to a voltage of the direct-current capacitors of the directly serially-connectable modules exceeding a second action voltage threshold and the first power semiconductor devices being turned on; and
turning off the second power semiconductor devices in response to the voltage of the direct-current capacitors of the directly serially-connectable modules returning to a voltage return value.

19. The control method of the three-phase converter according to Claim 16 or 17, wherein when the three-phase converter is started, the method comprises:
turning off the first power semiconductor devices and the second power semiconductor devices in the directly serially-connectable modules;
inputting an alternating current to the alternating-current terminals of the converter; and
charging each said direct-current capacitor until a voltage of the direct-current capacitor exceeds a starting voltage threshold to enable the converter to start.

20. The control method based on the three-phase converter according to Claim 16 or 17, wherein when the three-phase converter enters a normal operating state after being started, the method comprises:
controlling the first power semiconductor devices of the directly serially-connectable modules to be turned on or off by means of a control instruction;
controlling the second power semiconductor devices of the directly serially-connected modules to be turned on in response to a voltage of the direct-current capacitors of the directly serially-connectable modules exceeding a second action voltage threshold and the first power semiconductor devices being turned on; and
controlling the second semiconductor devices of the directly serially-connectable modules to be turned off in response to the voltage of the direct-current capacitors of the directly serially-connectable modules returning to a voltage return value.

21. The method according to Claim 20, further comprising:
in response to a fault happening to a directly serially-connectable module of the three-phase converter, turning off the first power semiconductor device of the faulted directly serially-connectable module; and
closing the bypass switch connected in parallel to the first power semiconductor device.
